(19) Europäisches Patentamt
European Patent Office
Office européen des brevets

(11) Numéro de publication: **0 326 484**
**A2**

(12) # DEMANDE DE BREVET EUROPEEN

(21) Numéro de dépôt: **89400201.3**

(22) Date de dépôt: **25.01.89**

(51) Int. Cl.⁴: **H 01 M 10/40**
H 01 M 4/60

(30) Priorité: **25.01.88 FR 8800783**

(43) Date de publication de la demande:
**02.08.89 Bulletin 89/31**

(84) Etats contractants désignés: **BE DE FR**

(71) Demandeur: **COMMISSARIAT A L'ENERGIE ATOMIQUE**
**31/33, rue de la Fédération**
**F-75015 Paris (FR)**

(72) Inventeur: **Banide, Jacques**
**2 rue Pierre Curie**
**F-91490 Gometz le Chatel (FR)**

**Slama, Marco**
**51 Bld Richard Lenoir**
**F-75011 Paris (FR)**

**Tanguy, Jean**
**4 rue Alphonse Bertillon**
**F-75015 Paris (FR)**

(74) Mandataire: **Mongrédien, André et al**
**c/o BREVATOME 25, rue de Ponthieu**
**F-75008 Paris (FR)**

(54) **Générateur électrochimique utilisant un polymère conducteur électronique appartenant au groupe du polypyrrole comme cathode et procédé de traitement pour améliorer la capacité massique de cette cathode.**

(57) L'invention a pour objet un générateur électrochimique comportant une cathode en polymère conducteur électronique appartenant au groupe du polypyrrole contenant sous forme réduite un sel de métal alcalin.

Dans ce générateur on utilise une cathode (5) en polymère ou copolymère de pyrrole ou de dérivé substitué du pyrrole, une anode (11) réalisée par exemple en lithium ou en alliage aluminium-lithium, et un électrolyte (2) formé d'une solution d'un sel de métal alcalin dans un solvant organique comprenant un sulfite de dialkyle ou un sulfite d'éthylène, par exemple une solution de perchlorate de lithium dans du sulfite de diméthyle.

Ce générateur permet d'obtenir des performances énergétiques améliorées à condition de soumettre tout d'abord la cathode (5) à au moins une décharge puis à au moins un cycle de charge et de décharge pour obtenir des plateaux de tension lors de la charge et de la décharge à courant constant.

FIG. 1

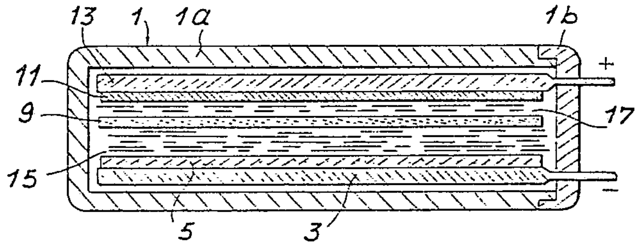


EP 0 326 484 A2

## Description

# GENERATEUR ELECTROCHIMIQUE UTILISANT UN POLYMERE CONDUCTEUR ELECTRONIQUE APPARTENANT AU GROUPE DU POLYPYRROLE COMME CATHODE ET PROCEDE DE TRAITEMENT POUR AMELIORER LA CAPACITE MASSIQUE DE CETTE CATHODE.

L'invention a pour objet un générateur électrochimique utilisant un polymère conducteur électronique appartenant au groupe du polypyrrole comme cathode.

De façon plus précise, elle concerne l'amélioration de la capacité massique de générateurs électrochimiques utilisant une telle matière active d'électrode comme cathode.

Des générateurs électrochimiques utilisant des polymères conducteurs électroniques comme matière active d'électrode ont été décrits dans de nombreuses publications. Ainsi, les brevets européens EP-A-143 966 et 49 970 décrivent des batteries dans lesquelles on peut utiliser divers polymères par exemple du polyacétylène, comme matière active d'électrode positive ou négative avec des électrolytes à base de sels de métaux alcalins en solution dans un solvant organique pouvant appartenir à différents groupes tels que les carbonates, les nitriles. les composés organosulfurés, les composés organophosphorés et les esters.

Le brevet américain US-A-4 550 067 décrit également des batteries utilisant des polymères conducteurs électroniques qui peuvent être associés à d'autres matières actives d'électrode ainsi qu'à divers électrolytes et de nombreux solvants.

On connaît aussi des générateurs électrochimiques du même type dans lesquels la cathode est un composé de graphite pyrolytique ou un fluorographite comme il est décrit dans les brevets américains US-A-3 844 837 et US-A-3 985 577. Dans ces brevets. on associe cette cathode à base de graphite à une anode en lithium en utilisant comme électrolyte une solution de sel de lithium dans un solvant organique, qui est de l'hexafluoroarsénate de lithium dans du sulfite de diméthyle, dans le cas du brevet américain 3 985 577.

On sait que les performances en énergie des cathodes en polymère conducteur dépendent de l'électrolyte utilisé, en particulier du solvant. Ainsi, lorsqu'on utilise un solvant formé de molécules de petites dimensions, on obtient une énergie massique supérieure à celle fournie lorsqu'on utilise un solvant dont les molécules ont une taille plus importante. Par exemple, lorsqu'on utilise comme solvant de l'acétonitrile au lieu de carbonate de propylène, on obtient avec le polypyrrole, un accroîssement de la capacité massique de la cathode de l'ordre de 20%. Plus récemment, on a découvert qu'en utilisant du carbonate d'éthylène au lieu de carbonate de propylène, on obtenait un accroîssement des performances en énergie du polypyrrole de l'ordre de 20 à 30%.

En dépit de ces progrés significatifs, l'énergie massique que l'on peut extraire des cathodes en polymère conducteur tel que les polypyrroles, reste limitée à des valeurs comprises entre 80 et 140 Ah/kg d'électrode dans les meilleurs cas. Ceci est du au fait que la réaction d'oxydoréduction de la cathode s'accompagne d'un phénomène d'insertion et de désinsertion de l'anion négatif provenant de l'électrolyte (par exemple $ClO_4^-$) entouré de son cortège de molécules de solvant. Etant donné le poids moléculaire de ces anions, le nombre total d'ions qui peuvent s'insérer dans le polymère est limité. Il est apparu que l'on pouvait insérer par exemple dans le polypyrrole au maximum deux ions $ClO_4^-$ pour trois motifs pyrrole, et ceci introduit une limitation de la capacité massique de l'électrode.

Par ailleurs, ce mécanisme d'oxydoréduction des polymères conducteurs est caractérisé par un accroîssement quasilinéaire du taux de dopage en fonction du potentiel de l'électrode au cours de la charge. Il en résulte que les courbes de décharge de ces électrodes (potentiel en fonction du temps) présentent une partie décroissante à peu près linéaire avec un palier de tension en décharge assez peu prononcé, ce qui limite la capacité massique de l'électrode, comme il apparaît dans le document J. of the Electrochem. Soc., 133, n°6 (juin 1986), p. 1073-1079.

Pour améliorer les performances de générateurs électrochimiques utilisant des cathodes en polymère organique conducteur électronique, on a envisagé l'utilisation d'autres solvants tels que le sulfite de diméthyle, le sulfite de glycol ou l'anhydride sulfureux comme il est décrit dans DE-A-3 507 422.

On a aussi décrit dans le document EP-A-0 143 966 des générateurs électrochimiques comportant une anode en polymère conjugué qui a été revêtue, à l'état réduit, par contact avec un monomère comprenant un groupe oxiranne réactif et qui peut être associée à diverses cathodes et divers électrolytes parmi lesquels figurent le sulfite de diméthyle et le carbonate de propylène.

Toutefois, il serait d'un grand intérêt d'améliorer encore les performances des générateurs électrochimiques des types décrits ci-dessus.

La présente invention a précisément pour objet un générateur électrochimique utilisant comme cathode un polymère conducteur électronique appartenant au groupe du polypyrrole, qui permet d'obtenir des performances en énergie nettement supérieures à celles que l'on obtient avec les générateurs électrochimiques décrits ci-dessus.

Selon l'invention, ce générateur électrochimique comporte une cathode, une anode et un électrolyte constitué par une solution d'un sel de métal alcalin dans un solvant organique comprenant un sulfite de dialkyle ou un sulfite d'éthylène, et il se caractérise en ce que la cathode comprend un polymère organique conducteur électronique choisi parmi les polymères et copolymères du pyrrole et des dérivés substitués du pyrrole, la cathode contenant sous forme réduite le sel de métal alcalin de l'électrolyte et présentant, lors de la décharge du générateur à courant constant, un plateau de potentiel de décharge.

Dans ce générateur électrochimique, le choix des matériaux utilisés pour la cathode et l'electrolyte permet d'obtenir des résultats améliorés après un traitement préliminaire de la cathode comme on le verra plus loin. Ces améliorations sont sans doute dues à la présence d'un second mécanisme de dopage du polymère entraînant un accroîssement de la charge totale stockée dans la cathode en polymère conducteur. Ce second mécanisme est dû en particulier à l'utilisation d'un électrolyte comprenant du sulfite de dialkyle ou du sulfite d'éthylène et un sel de métal alcalin.

Les sulfites de dialkyle utilisés sont de préférence des sulfites de dialkyle dans lesquels les radicaux alkyle ont de 1 à 4 atomes de carbone, comme le sulfite de diméthyle et le sulfite de diéthyle.

Le sulfite d'éthylène répond à la formule :

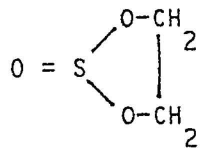

On peut le dénommer aussi sulfite de glycol.

Selon l'invention, il n'est pas nécessaire que le solvant organique de l'électrolyte soit uniquement constitué de sulfite de dialkyle. En effet, on peut également obtenir des performances supérieures en utilisant comme solvant un mélange de sulfite de dialkyle et d'un autre solvant organique comprenant au moins 10% en volume de sulfite de dialkyle. Cet autre solvant peut être l'un des solvants utilisés habituellement dans les générateurs électrochimiques. A titre d'exemple de tels solvants, on peut citer le carbonate d'éthylène, le carbonate de propylène, l'acétonitrile, le dioxolanne, le 2-méthyltétrahydrofuranne, la gamma-butyrolactone, le sulfolane, le diméthylsulfoxyde et plus généralement les éthers et les esters réputés stables en présence de métaux alcalins. De préférence, cet autre solvant est du carbonate d'éthylène ou du carbonate de propylène.

L'introduction d'un autre solvant dans lequel le sel de métal alcalin est plus soluble, permet en particulier d'utiliser un électrolyte plus concentré en sel alcalin, ce qui diminue le poids du générateur et augmente ainsi sa capacité massique totale.

Comme on l'a décrit précédemment, les polymères conducteurs utilisés dans le générateur de l'invention sont des polymères appartenant au groupe du polypyrrole qui sont le siège de réactions électrochimiques du type oxydo-réduction. Ainsi, sous l'effet d'un potentiel électrique, et en présence de l'électrolyte, le polymère utilisé fournit un électron du système d'électrons $\pi$ au système extérieur, laissant un défaut chargé positivement dans le réseau polymérique qui est compensé par la fixation sur ce réseau d'un anion négatif provenant de l'électrolyte. Pendant cette réaction, le polymère passe de l'état semi-isolant à l'état conducteur. Ainsi, lors de la charge du générateur, le polymère conducteur de la cathode fournit des électrons au réseau extérieur au générateur tandis qu'il se charge en anions provenant de l'électrolyte. A la décharge, le polymère reçoit des électrons de l'anode par le circuit extérieur et restitue les anions par le circuit intérieur au générateur.

Les polymères utilisés dans l'invention sont des polymères ou copolymères du pyrrole ou de dérivés substitués du pyrrole ; dans ce dernier cas il s'agit de polymères ou copolymères obtenus à partir de pyrrole comportant divers substituants, par exemple des radicaux alkyle, alcoxy, etc..., comme il est décrit dans le brevet européen EP-A-105 768.

De préférence, dans l'invention on utilise le polypyrrole ou un dérivé alkylé du polypyrrole comme le poly(N-méthylpyrrole).

Selon l'invention, la cathode peut également comprendre un additif susceptible d'améliorer les propriétés du polymère conducteur, en particulier ses propriétés mécaniques.

A titre d'exemple, on peut utiliser comme cathode un matériau composite dans lequel on améliore la tenue mécanique du polymère conducteur en l'associant à une autre substance ayant de meilleures propriétés mécaniques, comme par exemple le polytétrafluoréthylène. On peut aussi améliorer la conductivité du polymère conducteur en lui ajoutant du noir de carbone. L'additif tel que le polytétrafluoréthylène ou le noir de carbone peut être mélangé à la poudre de polymère conducteur, puis mis sous la forme d'électrode par compression du mélange de poudres. L'additif peut également être introduit lors de la fabrication du polymère conducteur pour former un copolymère.

Les polymères conducteurs utilisés dans l'invention peuvent être préparés par des procédés classiques, par exemple par polymérisation du monomère de base, soit par voie chimique, soit par voie électrochimique.

Dans le générateur électrochimique de l'invention, l'anode peut être réalisée en différents matériaux, par exemple en métaux ou alliages, ou encore en polymères conducteurs électroniques. Généralement, on utilise une anode comprenant un métal alcalin tel que le lithium. Ce métal alcalin peut constituer la totalité de l'anode ou il peut être associé à un autre métal sous la forme d'un alliage, par exemple d'un alliage aluminium-lithium. On peut aussi l'associer à un polymère conducteur électronique sous la forme d'ions dopants, par exemple utiliser un polymère conducteur électronique dopé par des ions de lithium.

Les électrolytes utilisés dans l'invention sont des sels de métal alcalin. Ces sels peuvent répondre à la formule MA dans laquelle M est le métal alcalin et A représente un anion. A titre d'exemple, cet anion peut être choisi parmi $ClO_4^-$, $AsF_6^-$, $BF_4^-$, $CF_3SO_3^-$, $PF_6^-$, $Br^-$, $F^-$, $Cl^-$ et $MCOO\text{-}COO^-$. De préférence, on utilise un sel de lithium tel que le perchlorate de lithium.

Pour obtenir le générateur électrochimique de l'invention ayant des performances énergétiques améliorées par rapport à ce que l'on obtient avec les

générateurs de l'art antérieur, il est nécessaire de soumettre tout d'abord une cathode en polymère organique conducteur électronique choisi parmi les polymères et copolymères du pyrrole et des dérivés substitués du pyrrole à au moins un cycle de traitement donnant un dopage amélioré du polymère conducteur pour former la cathode de l'invention, avant l'utilisation du générateur.

Aussi, l'invention a également pour objet un procédé de fabrication du générateur électrochimique conforme à l'invention, qui consiste à soumettre une cathode en polymère organique conducteur électronique choisi parmi les polymères et copolymères du pyrrole et des dérivés substitués du pyrrole, dopé par des anions dans un générateur électrochimique comprenant une anode et un électrolyte constitué par une solution d'un sel de métal alcalin dans un solvant organique comprenant un sulfite de dialkyle ou un sulfite d'éthylène, tout d'abord à au moins une décharge effectuée à un potentiel $V_2$ inférieur au potentiel de réduction de la cathode et au moins égal à 1,5V jusqu'à annulation du courant électrique, puis à soumettre la cathode ainsi déchargée à au moins un cycle de charge et de décharge entre un potentiel supérieur $V_1$ supérieur à $V_2$ et le potentiel inférieur $V_2$ de façon à obtenir des plateaux de tension lors de la charge et lors de la décharge à courant constant.

Après cette opération, on peut changer l'électrolyte du générateur électrochimique et le remplacer par de l'électrolyte frais pour l'utilisation proprement dite du générateur électrochimique.

Les potentiels $V_1$ et $V_2$ dépendent en particulier de l'anode utilisée.

De préférence, le potentiel $V_1$ est égal ou plus élevé que le potentiel supérieur d'utilisation $V'_1$ du générateur électrochimique.

Dans ce cas, avec une anode en alliage aluminium-lithium, on peut utiliser un potentiel $V_1$ supérieur à 3,5V et un potentiel $V_2$ de 1,5V.

Dans le procédé de l'invention, le fait de réaliser la première décharge du générateur dans ces conditions permet de faire rentrer du métal alcalin dans la cathode pour neutraliser les anions dopants qui n'ont pas été expulsés lors de la réduction. Lors des cycles suivants, on obtiendra donc à la charge tout d'abord un premier pic d'oxydation correspondant au dopage de la cathode par les anions de l'électrolyte, puis un second pic d'oxydation plus élevé en potentiel correspondant à l'expulsion du métal alcalin qui s'est accumulé dans la cathode lors de la première décharge.

D'autres caractéristiques et avantages de l'invention apparaîtront mieux à la lecture de la description qui suit, donnée bien entendu à titre illustratif et non limitatif, en référence aux dessins annexés sur lesquels :

- la figure 1 représente un générateur électrochimique conforme à l'invention,
- les figures 2, 3 et 4 sont des diagrammes illustrant l'évolution de la tension aux bornes du générateur de la figure 1, en fonction du temps au cours de cycles charge-décharge effectués conformément à l'invention,
- la figure 5 représente en coupe verticale une cellule électrochimique de mesure à trois électrodes,utilisée pour effectuer des mesures de voltamétrie cyclique,
-les figures 6, 7 et 8 sont des diagrammes représentant l'évolution de la tension en fonction du temps lors de la décharge d'une électrode conforme à l'invention,
-la figure 9 représente la coube de voltamétrie cyclique obtenue avec une cathode conforme à l'invention, en utilisant comme solvant le sulfite de diméthyle,
- la figure 10 représente une courbe de voltamétrie cyclique obtenue avec une cathode selon l'art antérieur,
- la figure 11 représente un cycle de charge et de décharge d'une cathode selon l'art antérieur,
- la figure 12 illustre le cycle de charge et de décharge d'une électrode conforme à l'invention non soumise au traitement préliminaire de l'invention, et
- la figure 13 représente la courbe de voltamétrie cyclique obtenue avec une cathode conforme à l'invention obtenue en utilisant comme solvant du sulfite d'éthylène.

Sur la figure 1, on a représenté un générateur électrochimique conforme à l'invention. Ce générateur comprend un boîtier étanche 1 composé de deux parties 1a et 1b réalisées par exemple en polyéthylène. A l'intérieur de ce boîtier, on a disposé successivement un premier collecteur de courant 3 en acier inoxydable, une cathode 5 constituée par du polypyrrole, une matière séparatrice 9 en fibres minérales, une anode 11 constituée par exemple par un alliage lithium-aluminium et un deuxième collecteur de courant 13 en acier inoxydable. Le boîtier 1 est rempli d'électrolyte constitué dans ce cas par un sel de lithium ($LiClO_4$) dissous dans du sulfite de diméthyle avec une concentration en $LiClO_4$ de 1 mol/l.

Une telle structure de générateur permet d'obtenir avec le traitement de l'invention, des performances en énergie améliorées par rapport à celles que l'on obtient lorsque l'on utilise comme électrolyte du perchlorate de lithium en solution dans du carbonate de propylène.

Ainsi, il est nécessaire de soumettre tout d'abord la cathode 5 à un traitement particulier. Ce traitement consiste à réaliser tout d'abord une décharge de la cathode dopée par des anions $ClO_4^-$ à un potentiel $V_2$ et 1,5 volt pendant une durée suffisante pour que le courant devienne nul, puis à effectuer au moins un cycle de charge et de décharge en utilisant pour la charge un potentiel $V_1$ supérieur au potentiel le plus élevé utilisé habituellement avec un générateur de ce type, par exemple un potentiel $V_1$ de 4V. On enregistre alors le potentiel entre la cathode et l'anode en effectuant la charge et la décharge à courant constant.

Les figures 2 et 3 représentent les courbes de charge-décharge obtenues avec ce générateur après 1 et 3 cycles de charge-décharge qui sont tous effectués avec un courant constant de 0,2 mA et une électrode en polypyrrole de 10 mg.

La figure 2 représente la courbe de charge et de

décharge obtenue lors du premier cycle, soit les variations de tension ( en V) aux bornes du générateur en fonction du temps (en h). Sur cette figure, on voit qu'il se forme un début de plateau horizontal P de tension à la décharge dû à l'effet conjugué de l'électrolyte et du polypyrrole. La capacité massique de l'électrode est de 145 Ah/kg.

La figure 3 représente la courbe de charge et de décharge correspondant au troisième cycle. On constate que le plateau de décharge P est plus long et qu'il se forme également un plateau lors de la charge. Ceci correspond à une forte capacité massique qui est de 260 Ah/kg dans ce cas.

A ce moment, on arrête les cycles de charge et de décharge à la tension de charge de 4V car si l'on poursuivait ces cycles, il se produirait une dégradation se traduisant par une coloration jaune du solvant et une perte de la capacité massique.

En revanche, comme il est représenté sur la figure 4, lorsqu'on utilise ensuite ce générateur électrochimique avec un seuil de charge légèrement supérieur à 3V et inférieur à 3,5V, on obtient un fonctionnement stable de ce générateur sans dégradation du solvant, et l'effet dû à l'association du sulfite de diméthyle, du perchlorate de lithium et du polypyrrole se manifeste par un plateau de charge aux alentours de 3V et un plateau de décharge compris entre 2 et 2,25V, avec une capacité massique de l'ordre de 190 Ah/kg. Cette valeur est notablement supérieure à celle que l'on obtient avec les générateurs électrochimiques de l'art antérieur.

Après ces premiers cycles de charge et de décharge, on peut remplacer l'électrolyte initial par de l'électrolyte frais de la même composition et retrouver immédiatement les paliers de charge et de décharge en ayant évacué d'éventuels produits de dégradation de l'électrolyte qui se seraient formés pendant les premiers cycles de charge-décharge à tension élevée. Ceci confirme que les premiers cycles de charge-décharge ont un effet sur l'électrode et non sur l'électrolyte.

On a réalisé d'autres expériences pour étudier les propriétés d'électrodes en polypyrrole en utilisant le dispositif représenté sur la figure 5.

Cette figure 5 illustre en coupe verticale une cellule électrochimique à trois électrodes permettant d'effectuer des mesures de voltamétrie cyclique.

Sur cette figure, on voit que la cellule comprend un corps de cellule 18 comportant un évidement central qui détermine une chambre 20 pour une solution d'électrolyte. Un compartiment 22 est disposé à la partie supérieure de la cellule pour assurer le remplissage et la vidange de la chambre 20. Un autre compartiment 24 destiné à une électrode de référence est disposé également à la partie supérieure de la cellule.

Le corps de cellule 18 comporte des trous filetés pour deux vis d'amenée de courant 26 ; une électrode 28 et une contre-électrode 30 sont disposées de part et d'autre de la chambre 20.

L'électrode 28 est constituée par la pièce en polypyrrole dont on veut étudier les propriétés. Pour assurer le montage de cette électrode dans la cellule, le corps de cellule 18 comprend deux flasques 18a et 18b qui peuvent être reliés entre eux par des systèmes vis-écrous tels que 32, 34.

Pour assurer l'amenée de courant sur l'électrode à étudier, un disque en inox 36 est interposé entre le flasque 18a et l'électrode 28 et une grille en matière plastique 38 est interposée entre l'électrode 28 et un joint d'étanchéité 40 en matière plastique.

De même, un joint 42 en matière plastique est interposé entre le flasque 18b et le corps de cellule pour réaliser l'étanchéité.

Le compartiment 24 de l'électrode de référence est constitué d'une enveloppe en pyrex qui délimite deux volumes, à savoir un volume supérieur 44 et un volume inférieur 45 séparés par une paroi 46. Un fil d'amiante 47 scellé dans le pyrex relie électriquement ces deux volumes. Le volume 45 est en communication avec la chambre 20 par un canal longitudinal 48. L'électrode de référence 50 réalisée par exemple en argent est collée sur le bouchon tronconique 51.

Dans une première série d'expériences, on utilise une électrode 28 en polypyrrole de 3 mg et on effectue des mesures de voltamétrie cyclique sur cette électrode en utilisant comme électrolyte une solution à 1 mol/l de perchlorate de lithium dans le sulfite de diméthyle et une contre-électrode en aluminium, ce qui correspond à un fonctionnement en demi-pile.

La figure 6 représente la courbe de décharge (tension en fonction du temps) obtenue avec un courant constant de décharge de 0,2 mA. On remarque que dans ce cas, on obtient un plateau de décharge aux environs de -1V par rapport à l'électrode d'argent. La charge totale obtenue avec ce courant constant de 0,2 mA est de 400 Ah/kg de polypyrrole, soit 3 à 4 fois la charge recueillie dans les meilleures conditions avec un générateur électrochimique utilisant du carbonate d'éthylène.

Sur la figure 7, on a représenté la courbe de décharge obtenue en utilisant un courant constant de décharge de 0,4 mA. Dans ce cas, la capacité massique de l'électrode a tendance à diminuer puisqu'elle n'est plus que de 250 Ah/kg, ce qui reste toutefois très supérieur aux résultats obtenus avec les générateurs de l'art antérieur.

Sur la figure 8, on a représenté la courbe de décharge obtenue lorsqu'on porte le courant de décharge à 1 mA. Dans ces conditions, la capacité massique diminue encore puisqu'elle n'est plus que de 150 Ah/kg. Elle reste cependant très supérieure à ce que l'on otient avec les générateurs de l'art antérieur.

Dans une deuxième série d'expériences, on a testé les propriétés d'une électrode en polypyrrole après plusieurs cycles de charge-décharge. Dans ce cas, on utilise également le dispositif de la figure 5 avec un échantillon de polypyrrole de 4,3 mg et un électrolyte constitué par une solution de sulfite de diméthyle contenant 1 mol/l de perchlorate de lithium. Dans ces conditions, en utilisant pour la décharge un courant constant de 0,2 mA, on obtient une capacité massique de l'électrode de 310 Ah/kg au septième cycle, de 210 Ah/kg au vingtième cycle, et de 145 Ah/kg au quarantième cycle. On voit donc que l'électrode de polypyrrole peut subir des cycles

de charge-décharge d'une manière répétitive sans dommage excessif. La diminution de puissance constatée au cours du cyclage, est probablement due à un défaut de porosité de l'électrode qui entraîne une densité de courant plus importante dans les couches superficielles. Ceci est confirmé par le fait que l'on obtient généralement les valeurs les plus élevées de capacité massique avec les échantillons les plus minces pour lesquels le phénomène de dégradation est plus lent et la tenue au cyclage meilleure. On devrait donc pouvoir améliorer la tenue au cyclage en utilisant des électrodes plus minces ayant une épaisseur inférieure à 0,1 mm comportant des additifs tels que du noir de carbone, du polytétrafluoréthylène destinés à augmenter la porosité et la tenue mécanique de l'électrode.

Dans une troisième série d'expériences, on a effectué des mesures de voltamétrie cyclique sur une pastille de polypyrrole en utilisant comme électrolyte une solution à 2 mol/l de perchlorate de lithium dans le sulfite de diméthyle. Dans ce cas, on impose la tension de l'électrode par rapport à l'électrode de référence, et on mesure le courant qui traverse la cellule, la tension variant suivant une loi linéaire en fonction du temps avec une vitesse de balayage égale à 0,1 mV/s.

La figure 9 représente la courbe de voltamétrie cyclique obtenue dans ces conditions après trois cycles. Cette courbe est caractéristique des courbes de voltamétrie cyclique obtenues avec les électrodes en polypyrrole, mais elle présente cette fois deux pics d'oxydation $O_1$ et $O_2$ et un seul pic de réduction R.

L'analyse élémentaire de l'électrode de polypyrrole sous forme réduite utilisée dans cette troisième série d'expériences pour la figure 9 a montré qu'elle contenait 0,3 mol de $ClO_4Li$ par cycle pyrrole.

Sur la figure 10, on a représenté à titre comparatif la courbe de voltamétrie cyclique obtenue avec le polypyrrole dans les mêmes conditions, mais en utilisant un électrolyte constitué par une solution à 1 mol/l de perchlorate de lithium dans du carbonate de propylène. Sur cette courbe de voltamétrie cyclique, on remarque la présence d'un seul pic d'oxydation $O_1$ et d'un seul pic de réduction R avec une nette dissymétrie entre ces deux pics. On observe également un fort courant capacitif C qui apparaît sous forme d'un pseudo plateau de courant lorsque le potentiel tend vers les valeurs positives.

Si l'on compare cette courbe avec la courbe de la figure 11, on remarque ainsi que l'utilisation de l'électrode de l'invention avec du sulfite de diméthyle et du perchlorate de lithium conduit à l'obtention d'un deuxième pic d'oxydation qui traduit la présence d'un second mécanisme de dopage du polymère conducteur entraînant un accroîssement de la charge totale stockée dans l'électrode en polypyrrole. La surface totale des pics de la figure 9 est nettement plus importante que celle des pics de la figure 10. Par ailleurs, le pic de réduction R de la figure 9 est beaucoup mieux défini que le pic de réduction R de la figure 10. Ceci permet d'obtenir sur les courbes de décharge des plateaux de tension bien mieux définis que dans l'art antérieur comme il est décrit ci-dessous.

Sur la figure 11, on a représenté à titre comparatif la courbe de charge et de décharge obtenue avec une électrode de polypyrrole de 3 mg en présence d'un électrolyte constitué de carbonate de propylène contenant 1 mol/l de perchlorate de lithium. Cette courbe obtenue avec un courant constant de charge et de décharge de 0,05 mA montre la variation du potentiel de l'électrode par rapport à l'électrode de référence $Ag/Ag^+$ en fonction du temps. On voit que dans ce cas, il n'existe aucun plateau de tension lors de la charge ou de la décharge ; la capacité massique de l'électrode obtenue en rapportant la charge totale au poids de matière active d'électrode est égale à 80 Ah/kg, ce qui est très inférieur à ce que l'on obtient dans l'invention.

Les meilleurs résultats obtenus avec l'invention sont probablement dus à un mécanisme de dopage du polymère conducteur différent.

Le mécanisme de dopage classique admis pour les polymères conducteurs est un mécanisme de dopage anionique. Ainsi, en présence de perchlorate de lithium dans un solvant, on admet que la réaction de charge s'écrit :

$$PPy + ClO_4^- \leftrightarrows PPy^+, ClO_4^- + 1e^-.$$

Pour des considérations d'encombrement, il est difficile d'admettre qu'il y ait plus d'un anion $ClO_4^-$ par motif pyrrole, soit un poids total de 166 g/mol d'électrons, ce qui correspond à une capacité massique limite de 161 Ah/kg.

Pour expliquer que l'on peut obtenir des capacités massiques supérieures à cette valeur dans l'invention, il faut admettre l'existence d'un autre mécanime de dopage en supplément du mécanisme classique.

En effet, en raison des différences de solvatation des ions $ClO_4^-$ et $Li^+$, une partie des ions $ClO_4^-$ reste fixée sur le polymère au cours de la décharge. Dans ce cas, l'ion $Li^+$ rentre pour compenser la charge électronique du polymère suivant la réaction :

$$PPy^+ClO_4^- + e^- + Li^+ \rightarrow PPyClO_4Li$$

Ce mécanisme explique pourquoi il est nécessaire de surcharger le polymère en oxydation (deuxième pic d'oxydation) pour renforcer la charge du pic de réduction et obtenir le plateau important de décharge.

On a donc dans le polymère à l'état réduit un mélange de $PPy^0$ et de $PPy^0ClO_4Li$.

A l'oxydation, $PPy^0$ devient $PPy^+ClO_4^-$, ce qui correspond au premier pic d'oxydation, et $PPy^0ClO_4Li$ devient $PPy^+ClO_4^-$ par expulsion de Li, ce qui correspond au deuxième pic d'oxydation.

Ainsi, selon l'invention, lors du traitement préliminaire de l'électrode en polymère conducteur, on soumet tout d'abord l'électrode à une décharge à un potentiel $V_2$ inférieur au potentiel de réduction de l'électrode jusqu'à annulation du courant pour accumuler le métal alcalin dans l'electrode, puis on porte cette électrode à un potentiel supérieur ou égal au potentiel habituel de 400 mV par rapport à $Ag/Ag^+$ pour obtenir le premier pic correspondant à l'oxydation du polymère, puis le second pic dû à l'expulsion du métal alcalin. Une fois l'électrode formée, on peut diminuer le potentiel maximum à

+200 mV ou 0 mV par rapport à $Ag/Ag^{+}$ pour obtenir un fonctionnement stable caractérisé par un plateau de potentiel en charge à courant constant et un plateau de potentiel en décharge à courant constant, sans dégradation de l'électrolyte ni de l'électrode, en conservant une puissance stockée très intéressante.

Pour illustrer l'influence de ce traitement préliminaire de l'électrode, on a représenté sur la figure 12 les courbes de charge et de décharge obtenues avec le générateur électrochimique de la figure 1, en utilisant un courant constant de charge et de décharge de 0,2 mA, entre des bornes de potentiel fixées à 1V et 3,5V. Dans ces conditions, comme on le voit sur cette figure, les courbes de charge et de décharge ne sont pas différentes de celles que l'on obtient sur la figure 11 lorsqu'on utilise un électrolyte à base de carbonate de propylène et de perchlorate de lithium.

Sur la figure 13, on a représenté la courbe de voltamétrie cyclique obtenue dans les mêmes conditions que celle de la figure 9, mais en utilisant l0mg de polypyrrole et un électrolyte constitué par du sulfite d'éthylène contenant 2mol/l de $LiClO_4$ au lieu du sulfite de diméthyle contenant 2mol/l de $LiClO_4$. On remarque que cette courbe comporte comme celle de la figure 9 deux pics d'oxydation $O'_1$ et $O'_2$ et un seul pic de réduction R'.

## Revendications

1. Générateur électrochimique comportant une cathode, une anode et un électrolyte constitué par une solution d'un sel de métal alcalin dans un solvant organique comprenant un sulfite de dialkyle ou un sulfite d'éthylène, caractérisé en ce que la cathode comprend un polymère organique conducteur électronique choisi parmi les polymères et copolymères du pyrrole et des dérivés substitués du pyrrole, la cathode contenant sous forme réduite le sel de métal alcalin de l'électrolyte et présentant, lors de la décharge du générateur à courant constant, un plateau de potentiel de décharge.

2. Générateur électrochimique selon la revendication 1, caractérisé en ce que le sulfite de dialkyle est du sulfite de diméthyle.

3. Générateur électrochimique selon l'une quelconque des revendications 1 et 2, caractérisé en ce que le solvant organique est un mélange de sulfite de dialkyle et d'un composé organique choisi parmi le carbonate d'éthylène et le carbonate de propylène, le sulfite de dialkyle représentant au moins 10% en volume du mélange.

4. Générateur électrochimique selon l'une quelconque des revendications 1 à 3, caractérisé en ce que la cathode comprend un additif choisi parmi le noir de carbone et le polytétrafluoroéthylène.

5. Générateur électrochimique selon l'une quelconque des revendications 1 à 4, caractérisé en ce que l'anode est en métal, en alliage et/ou en polymère conducteur électronique.

6. Générateur électrochimique selon la revendication 5, caractérisé en ce que l'anode est en métal alcalin ou en alliage de métal alcalin.

7. Générateur électrochimique selon la revendication 5, caractérisé en ce que l'anode est en polymère conducteur électronique dopé par des ions de métal alcalin.

8. Générateur électrochimique selon l'une quelconque des revendications 1 à 7, caractérisé en ce que l'électrolyte est un sel de métal alcalin de formule MA dans laquelle M est le métal alcalin et A est un anion choisi parmi $ClO_4^-$, $AsF_6^-$, $BF_4^-$, $CF_3SO_3^-$, $PF_6^-$, $Br^-$, $F^-$, $Cl^-$ et $MCOO-COO^-$.

9. Générateur électrochimique selon l'une quelconque des revendications 6 à 8, caractérisé en ce que le métal alcalin est le lithium.

10. Générateur électrochimique selon l'une quelconque des revendications 8 et 9, caractérisé en ce que le sel de métal alcalin est le perchlorate de lithium.

11. Procédé de fabrication de la cathode du générateur électrochimique selon l'une quelconque des revendications 1 à 10, caractérisé en ce qu'il consiste à soumettre une cathode en polymère organique conducteur électronique choisi parmi les polymères et copolymères du pyrrole et des dérivés substitués du pyrrole, dopé par des anions, dans un générateur électrochimique comprenant une anode et un électrolyte constitué par une solution d'un sel de métal alcalin dans un solvant organique comprenant un sulfite de dialkyle ou du sulfite d'éthyléne, à au moins une décharge effectuée à un potentiel $V_2$ inférieur au potentiel de réduction de la cathode et au moins égal à 1,5V jusqu'à annulation du courant électrique, puis à soumettre la cathode ainsi déchargée à au moins un cycle de charge et de décharge entre un potentiel supérieur $V_1$ supérieur à $V_2$ et le potentiel inférieur $V_2$ de façon à obtenir des plateaux de tension lors de la charge et lors de la décharge à courant constant.

12. Procédé selon la revendication 11, caractérisé en ce que le potentiel $V_1$ est égal ou plus élevé que le potentiel supérieur d'utilisation $V'_1$ du générateur électrochimique.

13. Procédé selon la revendication 12, caractérisé en ce que l'anode étant en alliage aluminium-lithium, le potentiel $V_1$ est supérieur à 3,5 V, et le potentiel $V_2$ est égal à 1,5V.

FIG. 1

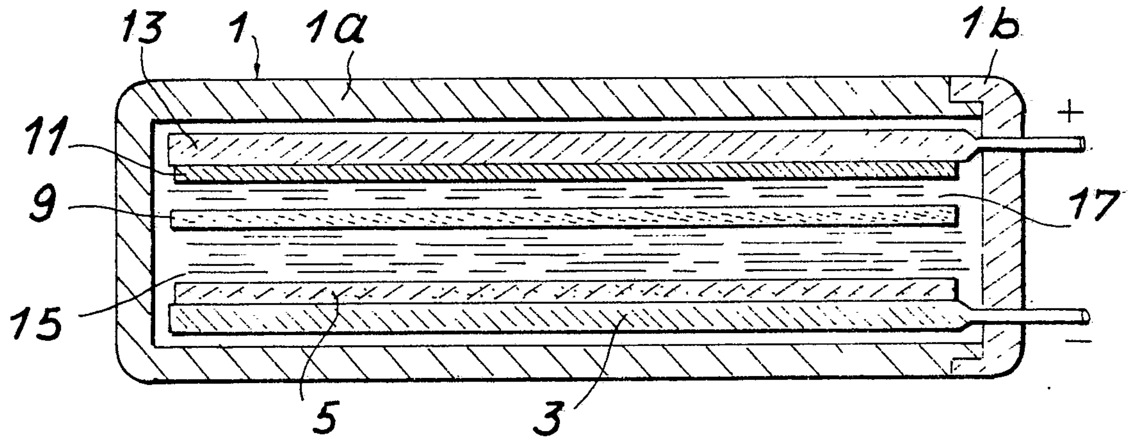


FIG. 2

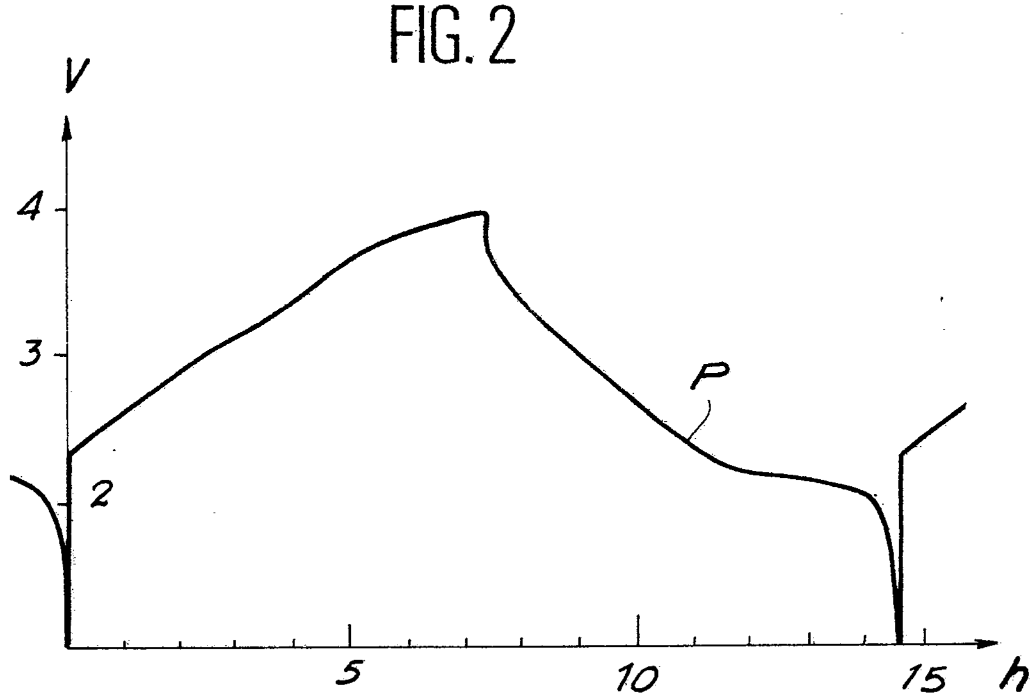

FIG. 3

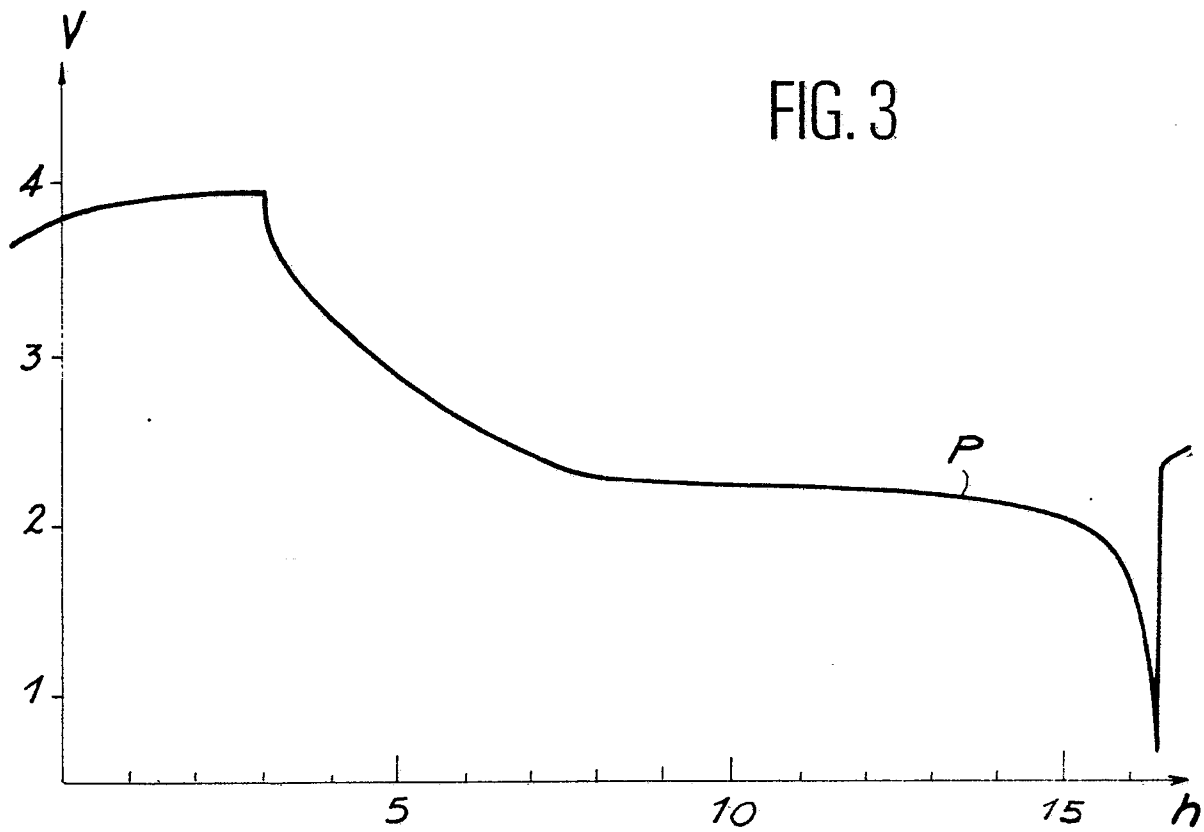


FIG. 4

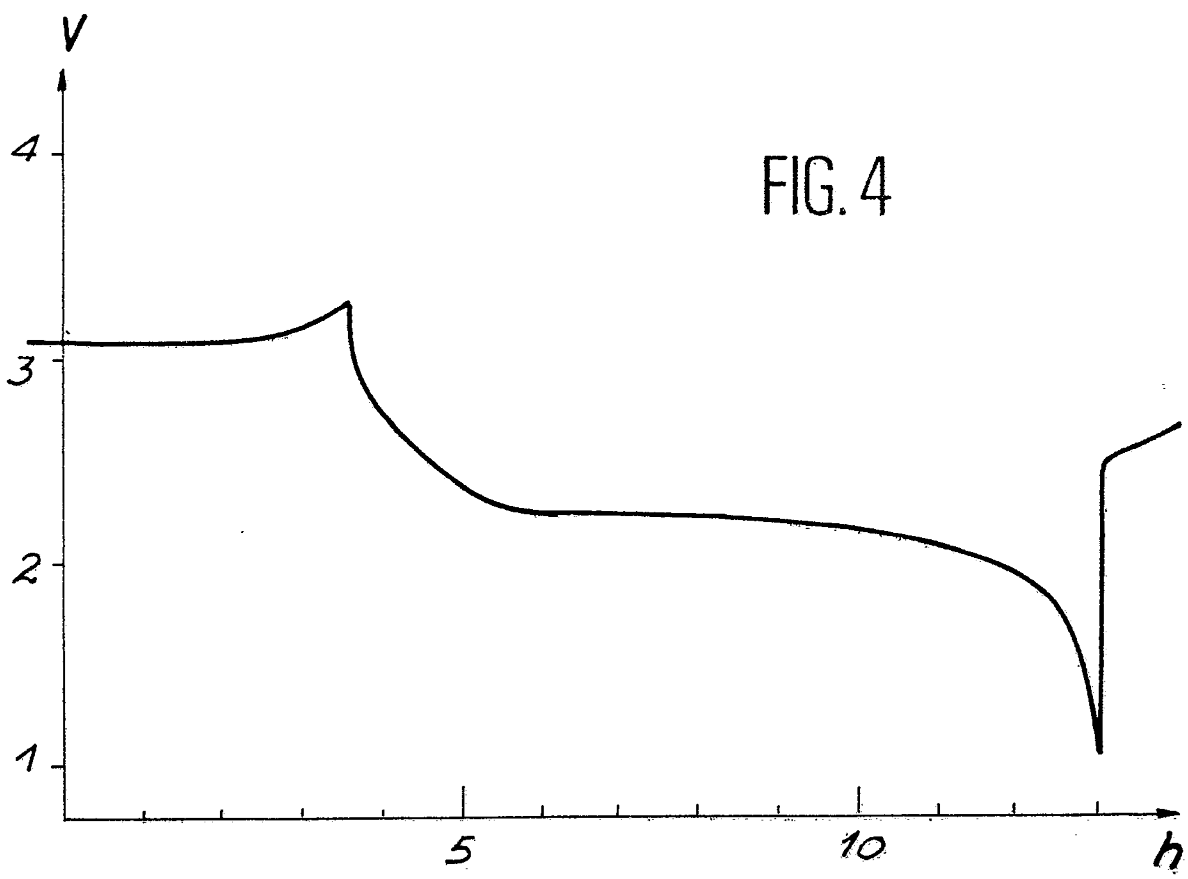

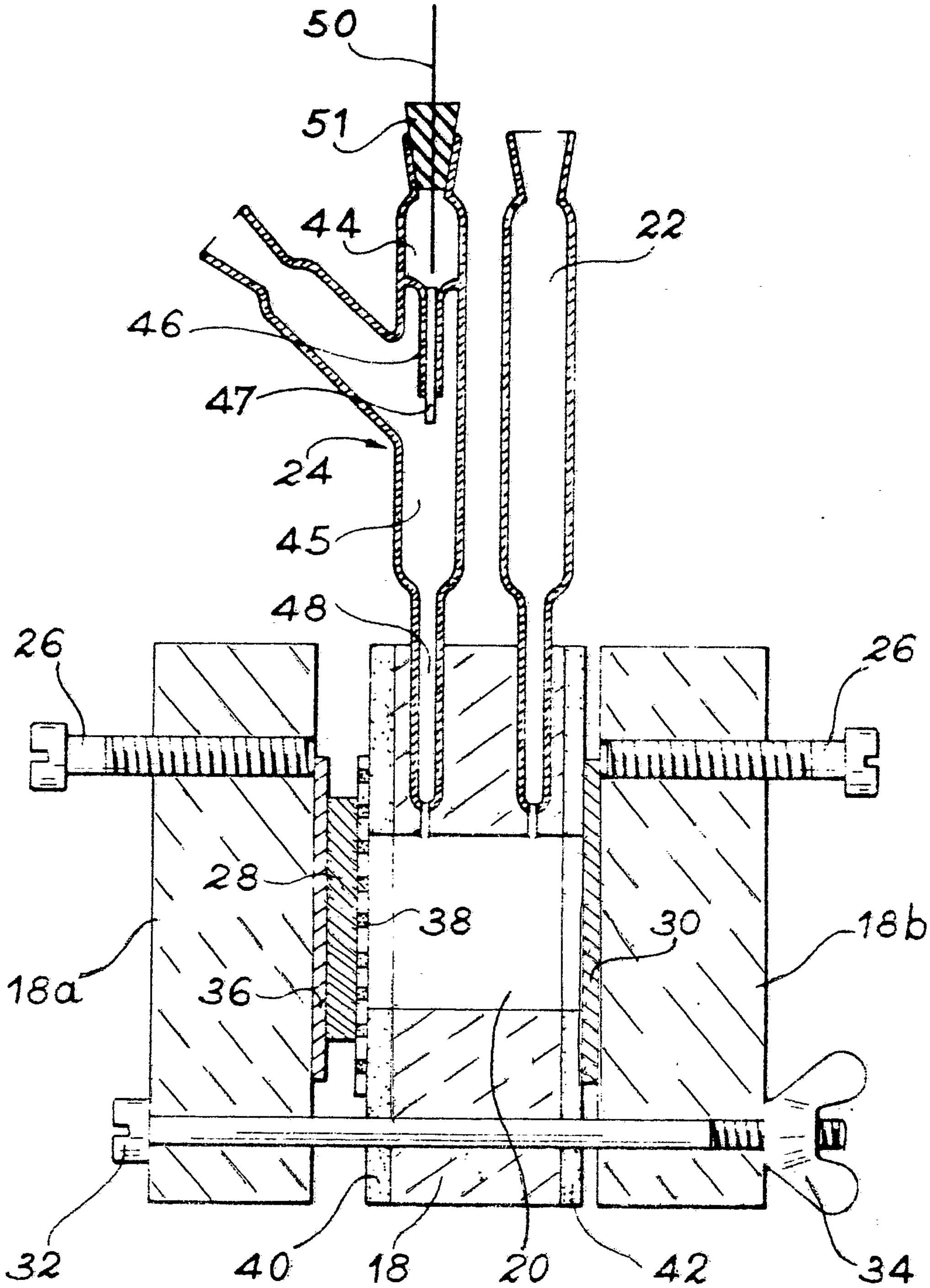


FIG. 5

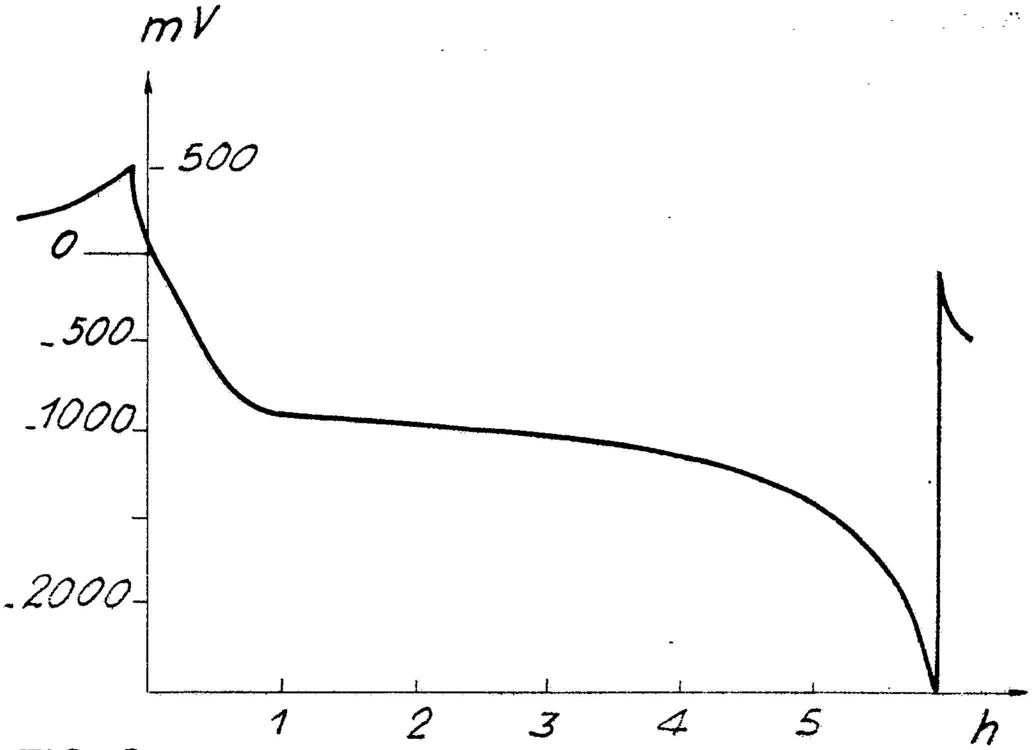


FIG. 6

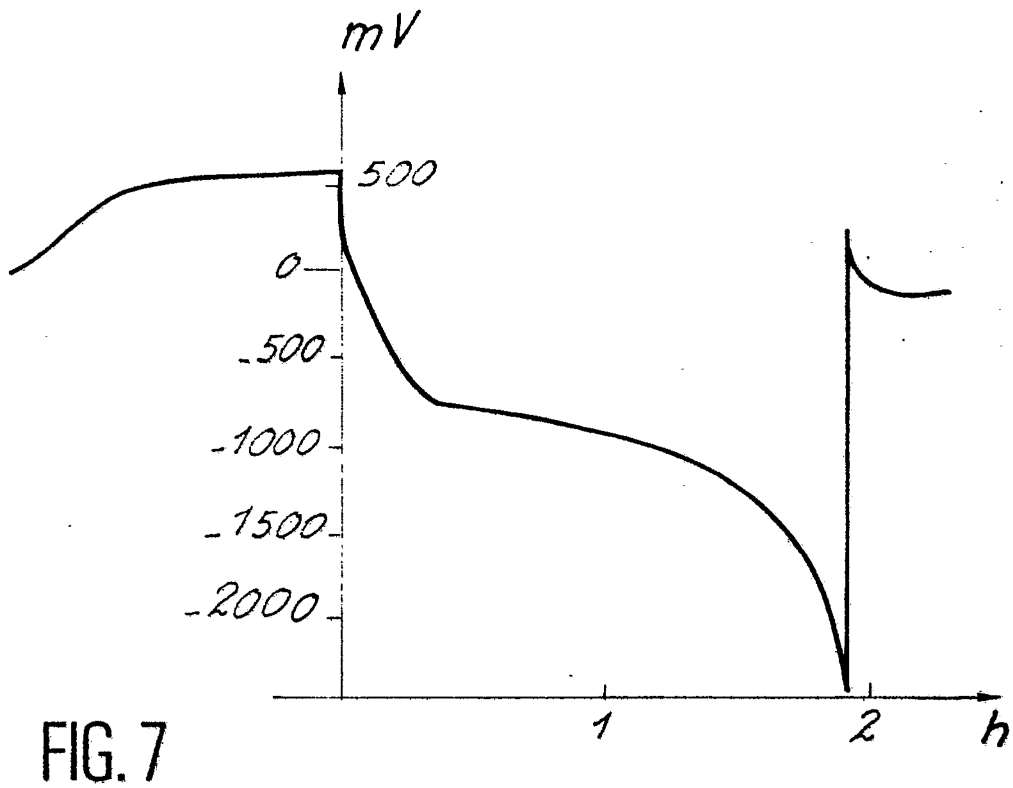


FIG. 7

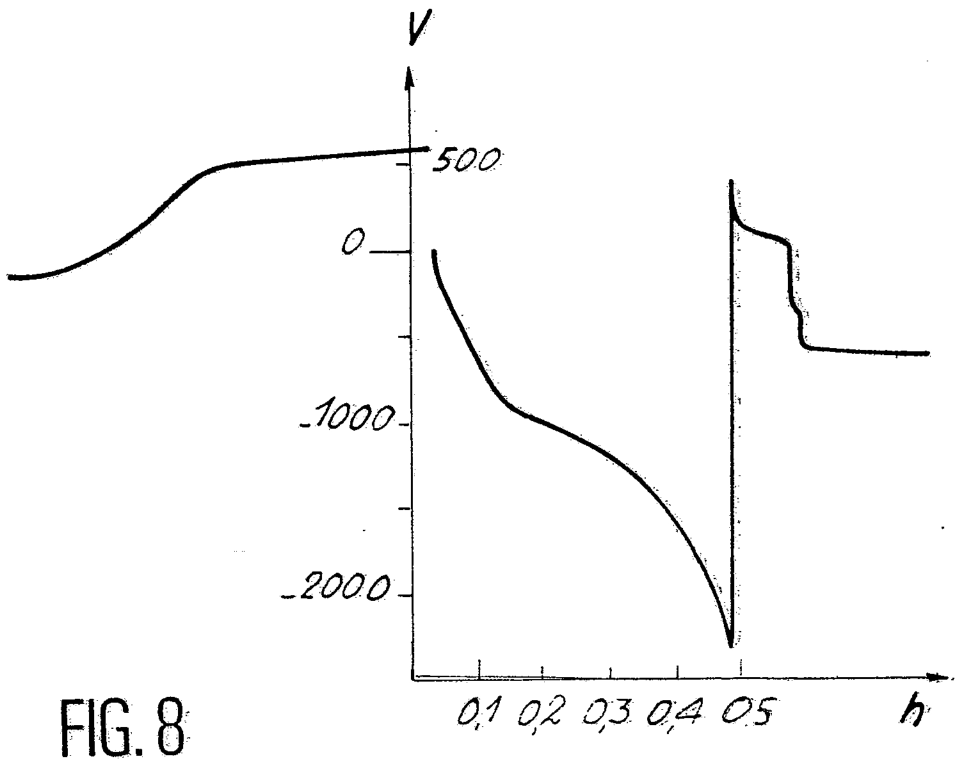
V
500
0
-1000
-2000
0,1 0,2 0,3 0,4 0,5
h

FIG. 8

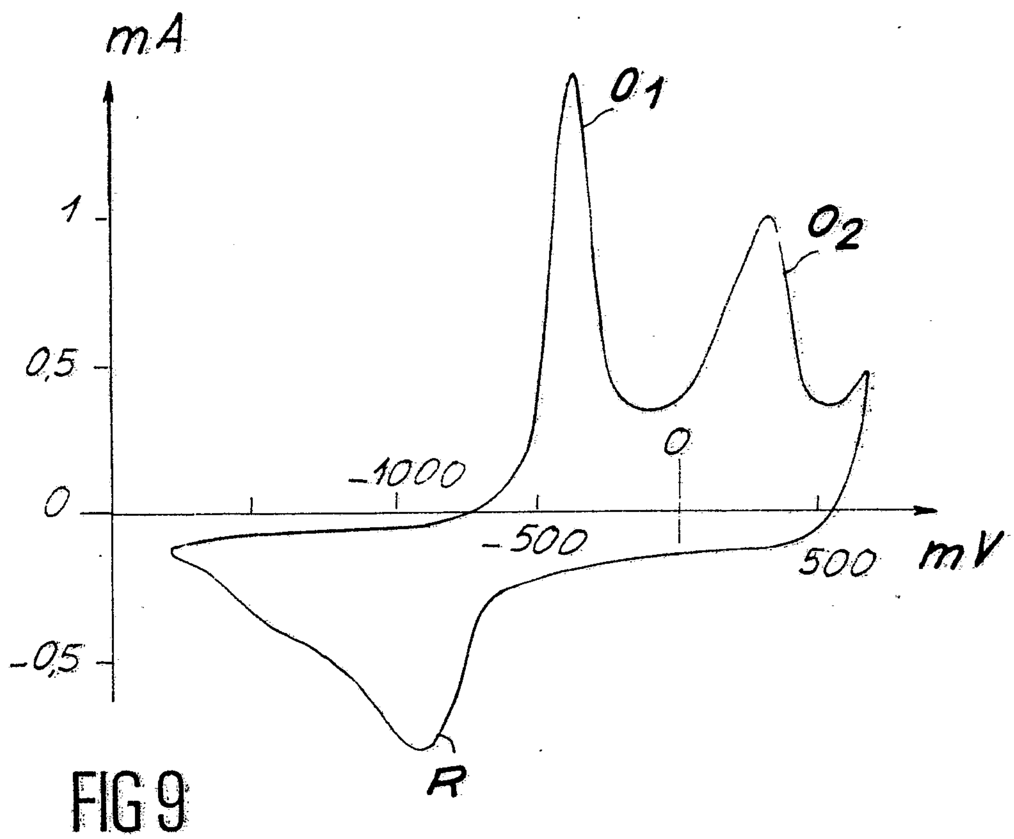
mA
$O_1$
$O_2$
1
0,5
0
-0,5
-1000
-500
0
500
mV
R

FIG 9

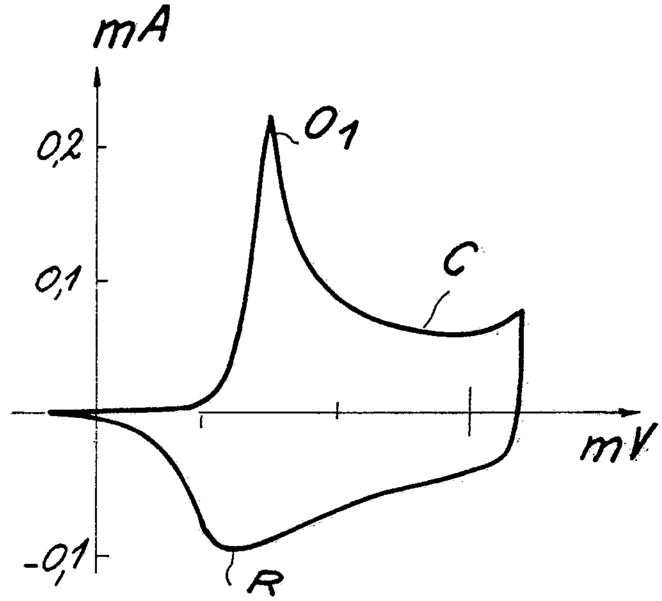


FIG. 10

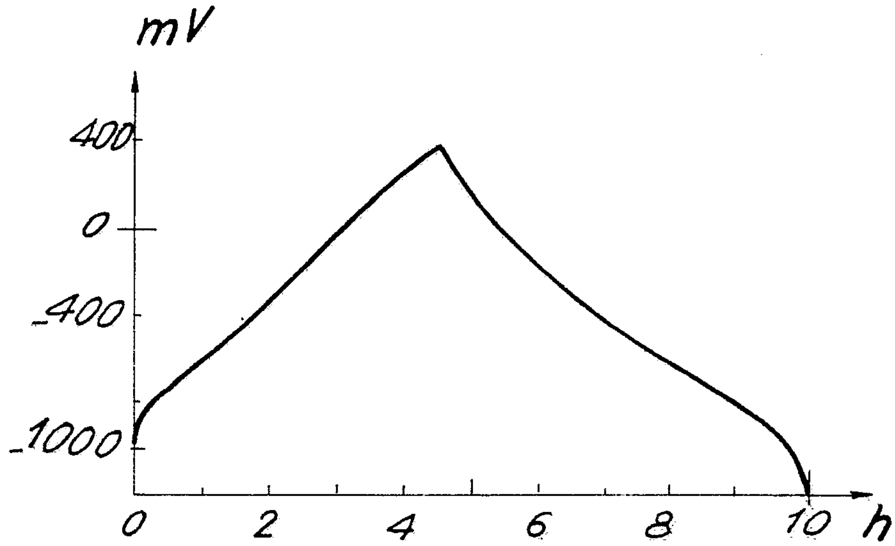


FIG. 11

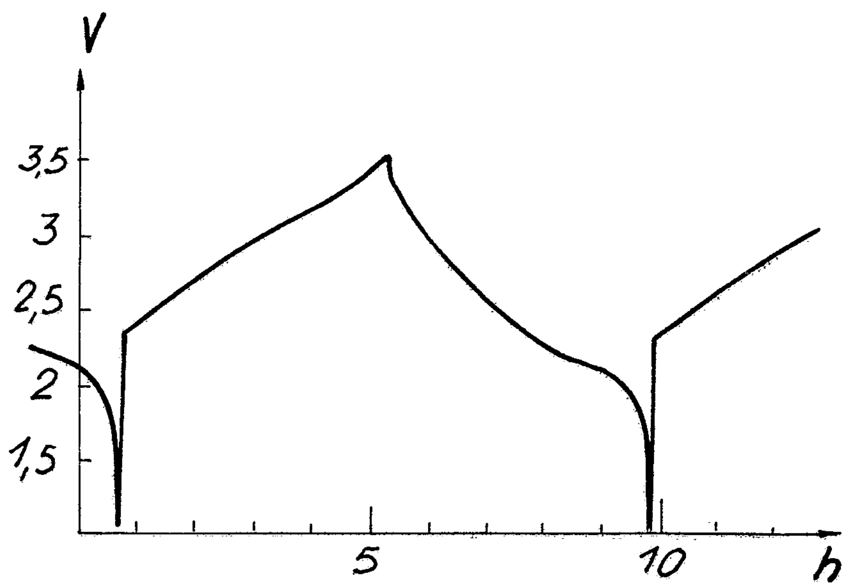


FIG. 12

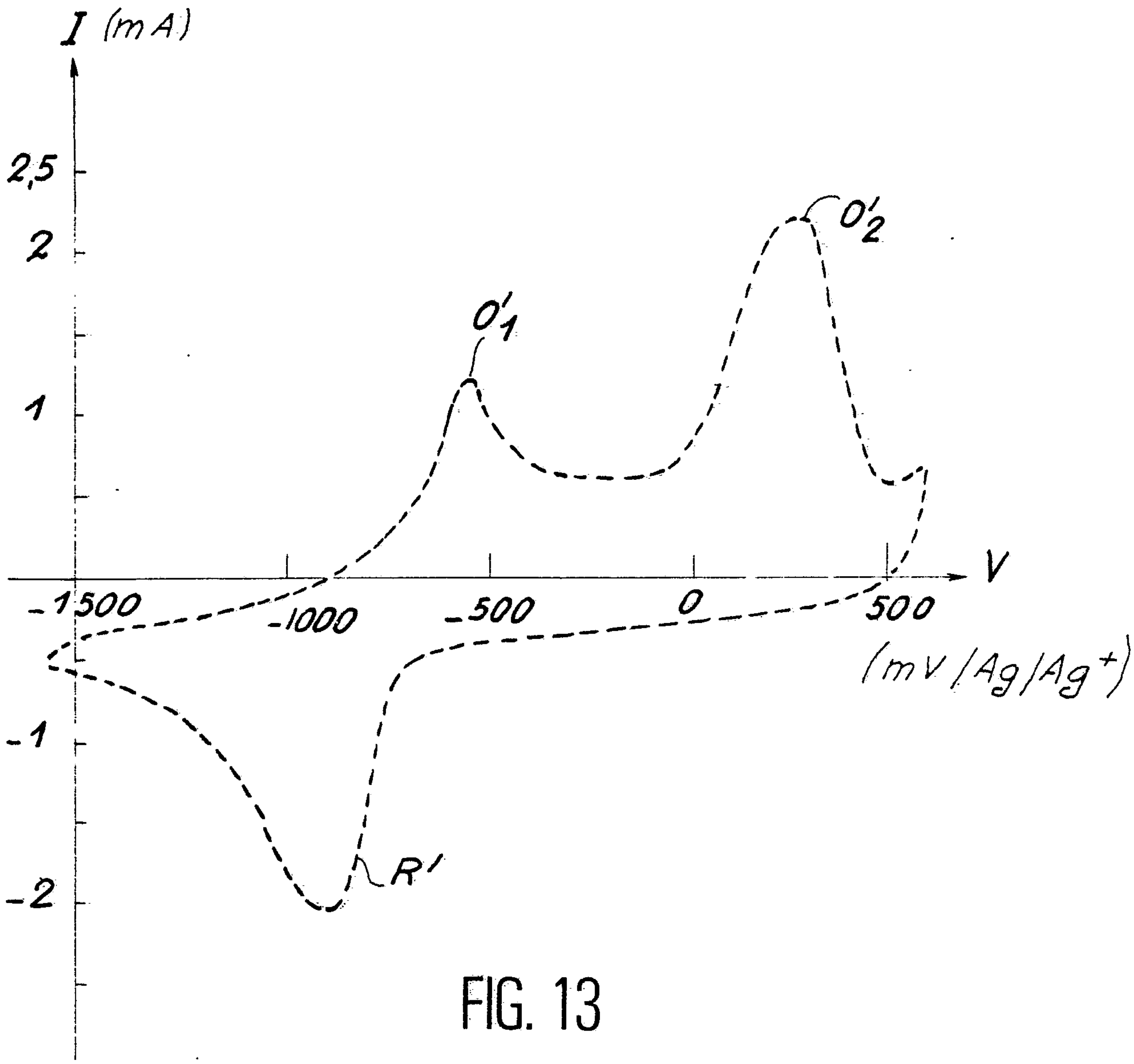


FIG. 13